# EUROPÄISCHE PATENTSCHRIFT

(11) **EP 1 460 306 B1**
(45) Veröffentlichungstag und Bekanntmachung des Hinweises auf die Patenterteilung: **09.01.2008**
(21) Anmeldenummer: 04450055.1
(22) Anmeldetag: 08.03.2004
(51) Int. Cl.: F16H 7/08, F16G 11/12, F16G 3/00

(54) **Spannvorrichtung für eine Kette**
Tensioner device for chain
Tendeur pour châine

(30) Priorität: 17.03.2003 AT 4232003
(43) Veröffentlichungstag der Anmeldung: 22.09.2004
(73) Patentinhaber: PEWAG AUSTRIA GmbH, 8010 Graz (AT)
(72) Erfinder: Pengg, Ägyd, 8010 Graz (AT)
(74) Vertreter: Patentanwaltskanzlei Matschnig

(56) Entgegenhaltungen:
- EP-A- 0 831 248
- DE-A- 19 739 025
- DE-U- 9 406 019
- GB-A- 2 021 225
- US-A- 3 591 140

## Beschreibung

Die Erfindung betrifft eine Spannvorrichtung für eine Kette, wobei die Spannvorrichtung zwei Endstücke aufweist, zwischen welchen eine mit ihnen verschraubte Gewindespindel angeordnet ist, die Längserstreckung der Spannvorrichtung durch ein Verdrehen der Gewindespindel gegenüber den Endstücken veränderbar ist, und zumindest ein Endstück mit einem ihm zugeordneten Verkürzungselement für die Kette verbunden ist, entsprechend dem Oberbegriff des Anspruchs 1.

Spannvorrichtungen der eingangs genannten Art sind aus dem Stand der Technik in großer Zahl unter den Bezeichnungen "Spindelspanner" oder "Spannschlösser" bekannt geworden. Üblicherweise sind derartige Spannvorrichtungen für Ketten aus Stahl hergestellt.

Eine herkömmliche Spannvorrichtung, wie sie beispielsweise aus der gattungsgemäßen EP 0 831 248 A bekannt geworden ist, ist in Fig. 1 dargestellt. Die bekannte Ausführungsform weist eine Gewindespindel GSP auf, welche mittels einer Ratsche RAT gegenüber zwei mit ihr verbundenen Endstücken EN1, EN2 verdreht werden kann. Die Gewindespindel GSP ist bezüglich ihrer Längsmittelgeraden λ rotationssymmetrisch ausgebildet und weist an einer Innenseitenwand ein Gewinde auf, wobei die beiden Endstücke EN1, EN2 an ihren je mit der Gewindespindel GSP korrespondierenden Bereichen ebenfalls ein Gewinde aufweisen. Darüber hinaus ist jedes der Endstücke EN1, EN2 an seinem der Gewindespindel abgewandten Bereich als Ring ausgebildet, in welchen ein Verkürzungshaken VK1, VK2 oder ein Lasthaken mittels eines Verbindungsgliedes VBG einhängbar ist.

Spannvorrichtungen der soeben beschriebenen Art finden vor allem beim Zurren und Abspannen von Ladegütem bei Schwertransporten Verwendung, obgleich die Verwendung nicht einzig auf diesen Bereich beschränkt ist. Nach Verbinden einer Kette, beispielsweise einer an sich bekannten Anschlagkette, mit den beiden Verkürzungshaken kann die Kette durch ein Verdrehen der Spindel gegenüber den Endstücken gespannt werden.

An der hier dargestellten, bekannten Ausführungsform ist die Montage der Verkürzungshaken bzw. der Lasthaken an den Endstücken EN1, EN2 relativ aufwendig und arbeitsintensiv, wodurch sich auch die Herstellungskosten erhöhen.

Aus der GB 2 021 225 A und der US 3, 591, 140 sind Spannvorrichtungen für Ketten bekannt geworden bei welchen ein Lasthaken mit Sicherung (GB 2 021 225 A) bzw. Dornen zur Verbindung von Endgliedern einer Kette (US 3, 591, 140) vorgesehen sind. Diese Spannvorrichtungen eignen sich bauartbedingt jedoch nicht zum Verkürzen einer Kette.

Die DE 12 04 94 U zeigt ebenfalls eine Vorrichtung zum Spannen von Ketten und Seilen. Dieser Spanner weist einen Weitmaulhaken auf, der bauartbedingt ebenfalls nicht zur Verkürzung von Ketten geeignet ist.

Aus der DE 197 39 025 A ist weiters ein Spannschloss für eine Kette bekannt geworden. Die bekannte Vorrichtung weist eine Gewindespindel auf, welche mit zwei Endstücken verschraubbar ist. Die Gewinde der Endstücke weisen unterschiedliche Durchmesser auf. Die Endstücke sind mit einer Kette, direkt verbunden, weshalb mit dem bekannten Spannschloss eine Verkürzung der Kette nicht möglich ist.

Es ist daher eine Aufgabe der vorliegenden Erfindung eine Spannvorrichtung für eine Kette zu schaffen, mit welcher ein Verkürzen bzw. Spannen der Kette auf einfache Weise möglich ist, und mit der die Montage von Verkürzungselementen vereinfacht werden kann.

Diese Aufgabe wird mit einer Spannvorrichtung der eingangs genannten Art erfindungsgemäß dadurch gelöst, dass das Verkürzungselement unmittelbar an dem Endstück angeordnet ist.

Unter unmittelbar wird hierbei verstanden, dass zwischen dem Verkürzungselement und dem Endstück kein weiteres Verbindungselement, wie beispielsweise eine Öse oder Kette vorgesehen ist. Durch die erfindungsgemäße Lösung wird die Herstellung einer Spannvorrichtung mit Verkürzungselementen wesentlich vereinfacht, wodurch sich auch die Herstellungskosten verringern lassen. Mit der erfindungsgemäßen Spannvorrichtung können Ketten auf einfache Weise auf die gewünschte Länge eingestellt und gespannt werden. Weiters ist es ein Verdienst der Erfindung, die Spannvorrichtung wesentlich kürzer bauen zu können, als es mit bekannten Kombinationen Spanner-Verkürzungselement möglich ist, wodurch auch die Handhabung der erfindungsgemäßen Spannvorrichtung wesentlich vereinfacht ist und der Einsatz auch bei Platzmangel sicher erfolgen kann.

In einer bevorzugten Ausführungsform der Erfindung ist zumindest ein Endstück mit dem ihm zugeordnete Verkürzungselement einstückig ausgebildet.

Vorteilhafterweise ist das Verkürzungselement um eine im wesentlichen normal zur Längserstreckung der Spannvorrichtung verlaufende Achse drehbar an dem Endstück gelagert.

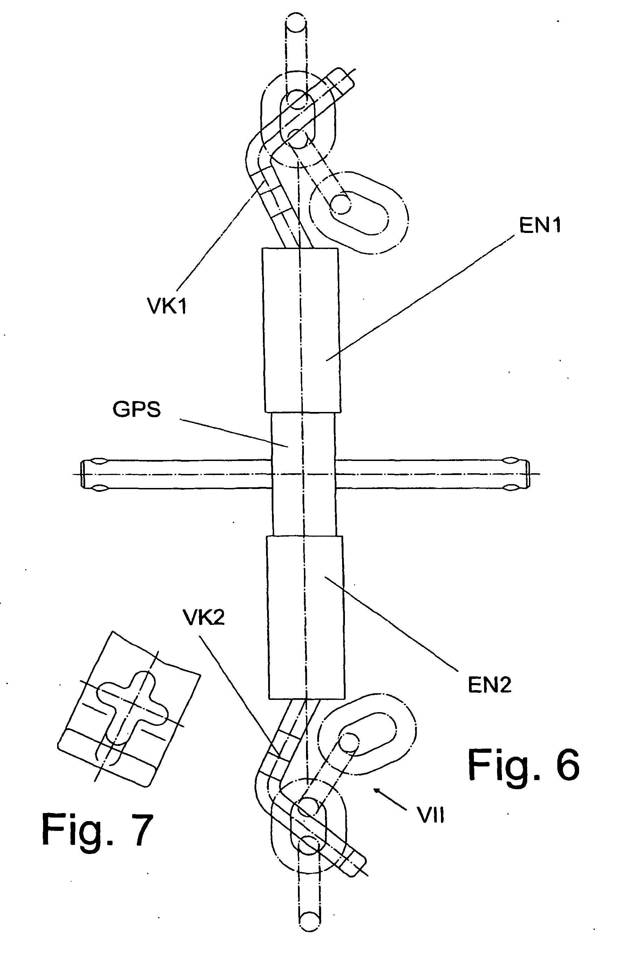

Weiters kann zumindest ein Verkürzungselement als Verkürzungshaken, als Verkürzungsklaue oder als Verkürzungsöse ausgebildet sein, wobei die Verkürzungsöse zwei kreuzförmig zueinander verlaufenden Schlitzen aufweist, durch welche aufeinander folgende Glieder der Kette durchziehbar sind (Fig. 6, 7).

Darüber hinaus kann zumindest ein Verkürzungselement ein Sicherungselement aufweisen, durch welches ein Herausrutschen eines Kettengliedes aus dem Verkürzungselement verhindert ist.

Um eine einfache und kraftsparende Betätigung zu gewährleisten kann die Gewindespindel von einem im wesentlichen normal zu ihrer Längserstreckung verlaufenden Stab durchsetzt sein, mittels welchem die Gewindespindel gegenüber den Endstücken verdrehbar ist.

Weitere Vorteile lassen sich dadurch erzielen, dass an jedem Endbereich je ein Verkürzungselement oder an einem Endbereich ein Verkürzungselement und an dem anderen Endbereich ein Lasthaken angeordnet ist.

In einer weiteren Ausführungsform der Erfindung kann zumindest eines der Endstücke als Kuppelelement, ausgebildet sein. In dieses Kuppelelement kann dann das Verkürzungselement unmittelbar, d. h. ohne Zwischenschaltung eines weiteren Verbindungselementes, wie beispielsweise einer Öse oder einer Kette, eingehängt sein.

Die Erfindung samt weiterer Vorteile wird im Folgenden anhand einiger nicht einschränkender Ausführungsbeispiele näher erläutert, welche in der Zeichnung dargestellt sind. In dieser zeigen schematisch:
Fig. 2 eine erste Variante der erfindungsgemäßen Spannvorrichtung;
Fig. 3 eine zweite Variante der erfindungsgemäßen Spannvorrichtung;
Fig. 4 eine dritte Variante der erfindungsgemäßen Spannvorrichtung;
Fig. 5 eine vierte Variante der erfindungsgemäßen Spannvorrichtung;
Fig. 6 eine fünfte Variante der erfindungsgemäßen Spannvorrichtung;
Fig. 7 eine Ansicht aus der Richtung VII in Fig. 6 und
Fig. 8 ein Spindelspanner dessen Endstücke als Kuppelelemente ausgeführt sind.

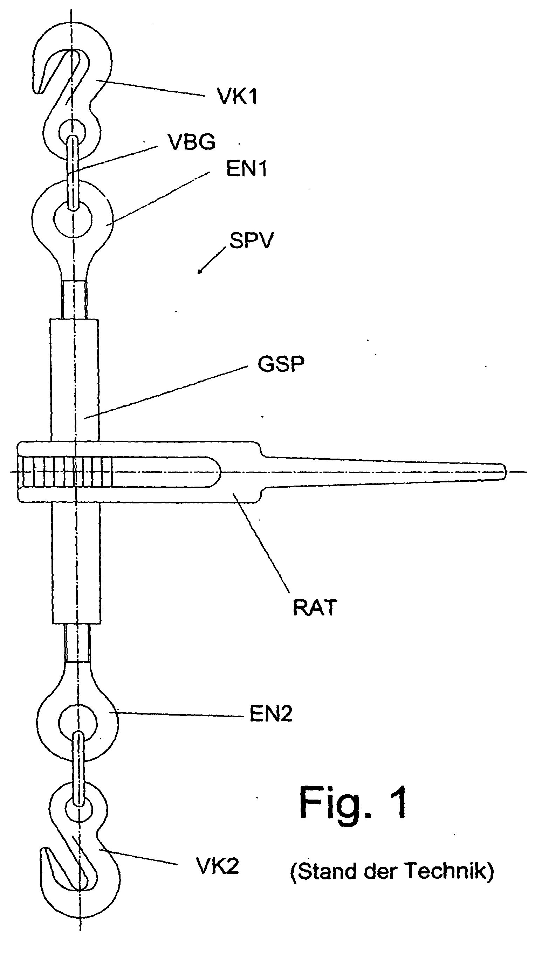

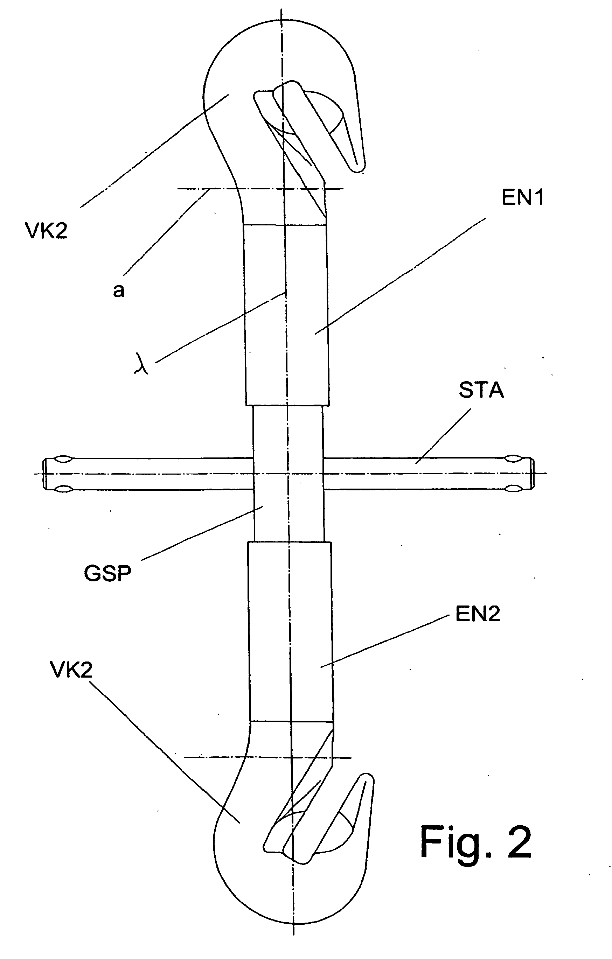

Gemäß Fig. 2 weist eine erfindungsgemäße Spannvorrichtung SPV für eine Kette KET an ihren längsseitigen Endbereichen zwei mit je einem Gewinde versehene Endstücke EN1, EN2 auf, zwischen denen eine mit ihnen verschraubte Gewindespindel GSP angeordnet ist. Die Endstücke können als die Gewindespindel übergreifende Gewindehülsen oder, wie in Fig. 1 dargestellt, als von einer hülsenförmigen Gewindespindel übergriffene Gewindebolzen gebildet werden. Als Material für die Spannvorrichtung findet bevorzugterweise Stahl Verwendung.

Die Längserstreckung der Spannvorrichtung SPV kann durch ein Verdrehen der Gewindespindel GSP gegenüber den Endstücken EN1, EN2 verändert werden. Um eine einfachere und kraftsparendere Betätigung der Spannvorrichtung zu ermöglichen, kann die Gewindespindel von einem im Wesentlichen normal zu ihrer Längsmittelgeraden λ verlaufenden Stab STA bzw. Knebel durchsetzt sein, der als Betätigungshebel für die Gewindespindel dient.

Zur Betätigung der Spindel kann aber auch anstelle des Knebels, wie aus dem Stand der Technik bekannt, eine Ratsche RAT Verwendung finden.

Unmittelbar an einem Endstück EN1, EN2 ist ein Verkürzungselement VK1, VK2 angeordnet. Das Verkürzungselement VK1, VK2 kann einstückig mit dem ihm zugeordneten Endstück EN1, EN2 ausgebildet sein. So können das Endstück EN1, EN2 und das Verkürzungselement VK1, VK2 aus einem Stück geschmiedet sein. Es ist aber auch möglich, dass das Verkürzungselement VK1, VK2 mit dem Endstück verschraubt und/oder verschweißt ist. Aus Kostengründen wird jedoch der Variante, in welcher das Endstück einstückig mit dem ihm zugeordneten Verkürzungselement ausgebildet ist, der Vorzug gegeben.

In der hier dargestellten Variante der Erfindung ist an beiden Endstücken EN1, EN2 je ein gleichartiges Verkürzungselement VK1, VK2 angeordnet. Es kann jedoch auch an einem Endstück EN1 ein Lasthaken oder ein beliebiges anderes bekanntes Element, wie beispielsweise eine Öse, und an dem anderen Endstück EN2 ein Verkürzungselement, beispielsweise ein als Parallelhaken ausgebildeter Verkürzungshaken, angeordnet sein kann.

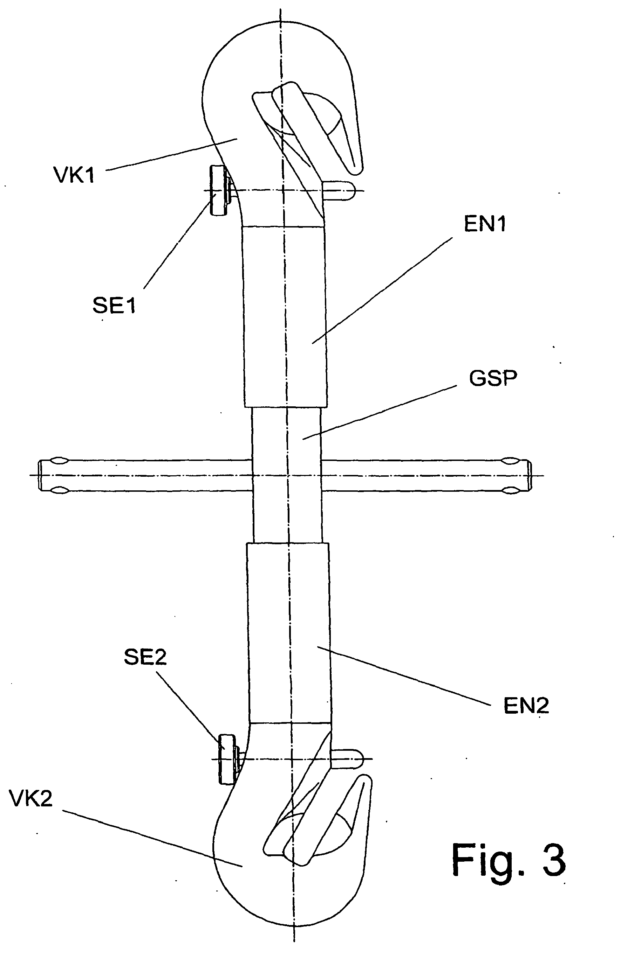

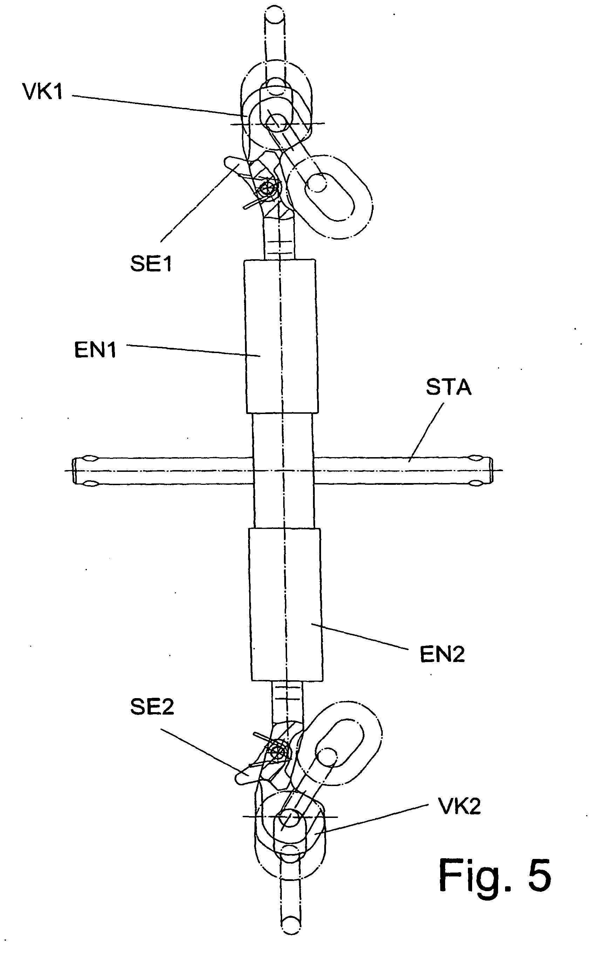

Eine Kette KET kann mit einem ihrer Glieder in das Verkürzungselement VK1, VK2 eingehakt werden, wobei ein Sicherungselement SE1, SE2 beispielsweise ein Sicherungsbolzen (Fig. 3) oder ein Schnappmechanismus (Fig. 5) vorgesehen sein kann, um ein Herausrutschen der Kette aus dem Verkürzungselement VK1, VK2 zu verhindern. Nach Einhaken der Kette KET kann diese durch Verdrehen der Gewindespindel GSP relativ zu den Endstücken EN1, EN2 gespannt werden.

Um auf die Endstücke EN1, EN2 wirkende Drehmomente zu verringern, kann das je zugeordnete Verkürzungselement VK1, VK2 bzw. der Lasthaken um eine im Wesentlichen normal zur Längserstreckung λ der Spannvorrichtung SPV verlaufende Achse a drehbar gelagert sein. Hierzu kann das Verkürzungselement VK1, VK2 mit einem Bolzen an dem zugeordneten Endstück EN1, EN2 drehbar gelagert sein.

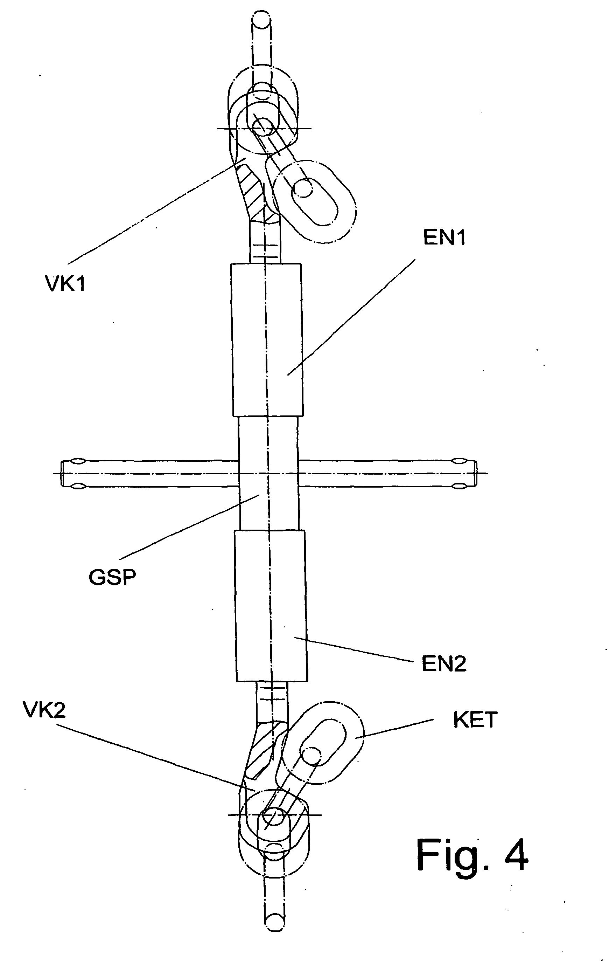

Als Verkürzungselement VK1, VK2 kann nach Fig. 4 auch eine an sich bekannte Verkürzungsklaue mit und ohne Sicherungselement SE1, SE2 zum Einsatz kommen.

Die Verkürzungsklaue kann einen gabelförmigen Kopf mit einem parallel zur Längserstre-Längserstreckung λ der Spannvorrichtung verlaufenden Schlitz aufweisen. Mit den Schlitz der Gabel kann die Verkürzungsklaue in die Kette einklinken, wobei der Schlitz ein Glied der Kette umfasst und das darauf folgende, um 90° verdrehte Glied an dem Gabelkopf anliegt.

Zur Sicherung der Kette gegen ein Herausrutschen aus der Verkürzungsklaue kann ein schwenkbar an einem Hals der Verkürzungsklaue gelagertes Sicherungselement angeordnet sein (Fig. 5). Durch ein Verschwenken des Sicherungselementes kann der Schlitz versperrt werden, sodass die Kette fixiert wird. Verkürzungsklauen sind in unterschiedlichsten Ausführungsformen bekannt geworden, beispielsweise aus der CH 513 348 A, der DE195 43 855 A1 oder der DE 43 02 641 A1.

Gemäß Fig. 6 und 7 kann das Verkürzungselement VK1, VK2 auch als Lasche mit einer Verkürzungsöse ausgebildet sein - siehe hierzu auch die DE 200 15 557 U1. Die Verkürzungsöse kann eine kreuzförmige Ausnehmung aufweisen, welche so ausgebildet ist, dass aufeinanderfolgende, um ca. 90° zueinander verdrehte Glieder der Kette durch die Öse gezogen werden können. Nach Verkürzen der Kette auf die gewünschte Länge kann die Kette gegebenenfalls mittels eines durch ein Kettenglied geschobenen mit der Öse zusammenwirkenden Sicherungsbolzens gegen die Spannvorrichtung fixiert werden.

Nach Fig. 8 können die Endstücke EN1, EN2 bzw. mindestens eines der Endstücke EN1, EN2 als Kuppelelemente ausgeführt sein. In jedes dieser Kuppelelemente kann gemäß der Erfindung ein Verkürzungselement, beispielsweise ein Verkürzungshaken, unmittelbar eingehängt sein.

## Patentansprüche

1. Spannvorrichtung (SPV) für eine Kette (KET), wobei die Spannvorrichtung zwei Endstücke (EN1, EN2) aufweist, zwischen welchen eine mit ihnen verschraubte Gewindespindel (GSP) angeordnet ist, die Längserstreckung der Spannvorrichtung (SPV) durch ein Verdrehen der Gewindespindel (GSP) gegenüber den Endstücken (EN1, EN2) veränderbar ist, und zumindest ein Endstück mit einem ihm zugeordneten Verkürzungselement (VK1, VK2) für die Kette (KET) verbunden ist, **dadurch gekennzeichnet, dass** in das Verkürzungselement (VK1, VK2), das unmittelbar an dem Endstück (EN1, EN2) angeordnet ist, eine mehrere Glieder enthaltende Kette (KET) mit einem ihrer Glieder eingehakt werden kann, sowie die Gewindespindel (GSP) mittels eines im wesentlichen normal zu ihrer Längserstreckung verlaufenden Stabes gegenüber den Endstücken (EN1, EN2) verdrehbar ist.

2. Spannvorrichtung nach Anspruch 1, **dadurch gekennzeichnet, dass** zumindest ein Endstück mit dem ihm zugeordneten Verkürzungselement (VK1, VK2) einstückig ausgebildet ist.

3. Spannvorrichtung nach Anspruch 1 oder 2, **dadurch gekennzeichnet, dass** das Verkürzungselement (VK1, VK2) um eine im wesentlichen normal zur Längserstreckung (λ) der Spannvorrichtung (SPV) verlaufende Achse (a) drehbar an dem Endstück (EN1, EN2) gelagert ist.

4. Spannvorrichtung nach einem der Ansprüche 1 bis 3, **dadurch gekennzeichnet, dass** das Verkürzungselement (VK1, VK2) ein Verkürzungshaken ist.

5. Spannvorrichtung nach einem der Ansprüche 1 bis 4, **dadurch gekennzeichnet, dass** das Verkürzungselement (VK1, VK2) eine Verkürzungsklaue ist.

6. Spannvorrichtung nach einem der Ansprüche 1 bis 5, **dadurch gekennzeichnet, dass** das Verkürzungselement (VK1, VK2) als Verkürzungsöse mit zwei kreuzförmig zueinander verlaufenden Schlitzen ausgebildet ist, durch welche aufeinander folgende Glieder der Kette (KET) durchziehbar sind (Fig. 6, 7).

7. Spannvorrichtung nach einem der Ansprüche 1 bis 6, **dadurch gekennzeichnet, dass** das Verkürzungselement ein Sicherungselement aufweist, durch welches ein Herausrutschen eines Kettengliedes aus dem Verkürzungselement verhindert ist.

8. Spannvorrichtung nach einem der Ansprüche 1 bis 7, **dadurch gekennzeichnet, dass** an jedem Endbereich (EN1, EN2) je ein Verkürzungselement (VK1, VK2) angeordnet ist.

9. Spannvorrichtung nach einem der Ansprüche 1 bis 7, **dadurch gekennzeichnet, dass** an einem Endbereich (EN1) ein Verkürzungselement (VK1, VK2) und an dem anderen Endbereich (EN2) ein Lasthaken oder anderes Verbindungselement angeordnet ist.

10. Spannvorrichtung nach einem der Ansprüche 1 bis 9, **dadurch gekennzeichnet, dass** zumindest ein Endstück (EN1, EN2) als Kuppelelement ausgebildet ist.

## Claims

1. Fastening device (SPV) for a chain (KET), such that the fastening device features two end pieces (EN1, EN2), between which is located is a threaded spindle (GSP) screwed to them, the length extension of the fastening device (SPV) can be changed by twisting the threaded spindle (GSP) against the end pieces (EN1, EN2), and at least one end piece with a shortening element (VK1, VK2) for the chain (KET) allocated to it is attached, **characterised in that** into the shortening element (VK1, VK2) which is arranged directly on the end piece (EN1, EN2) a chain (KET) including multiple members can be hooked with one of its members, and the threaded spindle (GSP) can be twisted against the end pieces (EN1, EN2) by means of a bar running basically normal to its length extension the threaded spindle (GSP) .

2. Fastening device according to claim 1, **characterised in that** at least one end piece is constructed as one piece with the shortening element (VK1, VK2) allocated to it.

3. Fastening device according to claim 1 or 2, **characterised in that** the shortening element (VK1, VK2) is located on the end piece (EN1, EN2) so it can be rotated about an axis (a) running basically normal to the length extension (λ) of the fastening device (SPV).

4. Fastening device according to one of the claims 1 to 3, **characterised in that** the shortening element (VK1, VK2) is a shortening hook.

5. Fastening device according to one of the claims 1 to 4, **characterised in that** the shortening element (VK1, VK2) is a shortening clutch.

6. Fastening device one of the claims 1 to 5, **characterised in that** the shortening element (VK1, VK2) is constructed as a shortening eye with two slots running crosswise to each other, through which successive links of the chain (KET) can be pulled (fig. 6, 7).

7. Fastening device according to one of the claims 1 to 6, **characterised in that** the shortening element features a retaining element, by which slippage of a chain link out of the shortening element is prevented.

8. Fastening device according to one of the claims 1 to 7, **characterised in that** a shortening element (VK1, VK2) is arranged on each end area (EN1, EN2).

9. Fastening device according to one of the claims 1 to 7, **characterised in that** a shortening element (VK1, VK2) is arranged on one end area (EN1) and a load hook or other joining element on the other end area (EN2).

10. Fastening device according to one of the claims 1 to 9, **characterised in that** at least one end piece (EN1, EN2) is constructed as a coupling element.

## Revendications

1. Dispositif tendeur (SPV) pour une chaîne (KET), où ledit dispositif tendeur comporte deux pièces d'extrémité (EN1, EN2), entre lesquelles est disposé un axe fileté (GSP) vissé avec celles-ci, l'extension en longueur du dispositif tendeur (SPV) pouvant être modifiée par une rotation de l'axe fileté (GSP) relativement aux pièces d'extrémité (EN1, EN2), et au moins une pièce d'extrémité étant reliée à un élément de raccourcissement (VK1, VK2) pour la chaîne (KET) qui lui est affecté, **caractérisé en ce que** en l'élément de raccourcissement (VK1, VK2), qui est disposé directement contre la pièce d'extrémité (EN1, EN2), une chaîne (KET) comportante plusieurs maillons peut être accrochée avec un de ses maillons et **en ce que** l'axe fileté (GSP) peut être tourné relativement aux pièces d'extrémité (EN1, EN2) au moyen d'un bâton s'étendant sensiblement perpendiculairement à son extension en longueur.

2. Dispositif tendeur selon la revendication 1, **caractérisé en ce qu'**au moins une pièce d'extrémité est réalisée d'un seul tenant avec l'élément de raccourcissement (VK1, VK2) qui lui est affecté.

3. Dispositif tendeur selon la revendication 1 ou la revendication 2, **caractérisé en ce que** l'élément de raccourcissement (VK1, VK2) est monté contre la pièce d'extrémité (EN1, EN2), rotatif autour d'un axe (a) s'étendant sensiblement perpendiculairement à l'extension en longueur (λ) du dispositif tendeur (SPV).

4. Dispositif tendeur selon l'une des revendications 1 à 3, **caractérisé en ce que** l'élément de raccourcissement (VK1, VK2) est un crochet de raccourcissement.

5. Dispositif tendeur selon l'une des revendications 1 à 4, **caractérisé en ce que** l'élément de raccourcissement (VK1, VK2) est une pince de raccourcissement.

6. Dispositif tendeur selon l'une des revendications 1 à 5, **caractérisé en ce que** l'élément de raccourcissement (VK1, VK2) est réalisé comme oeillet de raccourcissement à deux fentes de disposition cruciforme, par lesquelles peuvent être passés des maillons consécutifs de la chaîne (KET) (fig. 6, 7).

7. Dispositif tendeur selon l'une des revendications 1 à 6, **caractérisé en ce que** l'élément de raccourcissement comporte un élément de blocage empêchant un dérapage d'un maillon de chaîne en dehors de l'élément de raccourcissement.

8. Dispositif tendeur selon l'une des revendications 1 à 7, **caractérisé en ce qu'**un élément de raccourcissement (VK1, VK2) est disposé sur chaque zone d'extrémité (EN1, EN2).

9. Dispositif tendeur selon l'une des revendications 1 à 7, **caractérisé en ce qu'**un élément de raccourcissement (VK1, VK2) est disposé sur une zone d'extrémité (EN1), et un crochet porte-charge ou un autre élément de raccordement sur l'autre zone d'extrémité (EN2).

10. Dispositif tendeur selon l'une des revendications 1 à 9, **caractérisé en ce qu'**au moins une pièce d'extrémité (EN1, EN2) est réalisée comme élément d'accouplement.
